# EUROPEAN PATENT SPECIFICATION

(11) **EP 2 099 190 B1**
(45) Date of publication and mention of the grant of the patent: **28.09.2011**
(21) Application number: 08152341.7
(22) Date of filing: 05.03.2008
(51) Int. Cl.: H04L 29/06, G06F 21/00

(54) **Media security system and method**
Mediensicherheitssystem und Verfahren
Système et procédé de sécurité de support

(43) Date of publication of application: 09.09.2009
(73) Proprietor: RESEARCH IN MOTION LIMITED, Waterloo, Ontario N2L 3W8 (CA)
(72) Inventor: Yach, David, Waterloo Ontario N2K 2N1 (CA)
(74) Representative: MERH-IP Matias Erny Reichl Hoffmann

(56) References cited:
- DE-A1- 10 245 763
- GB-A- 2 399 724
- US-A1- 2001 052 071
- US-A1- 2002 097 878

## Description

The present specification relates generally to communication and more specifically relates to a media security system and method.

Today, many computer files are not to be released publicly until a specified date and time. Examples include, but are not limited to, company earnings press releases, new movie releases, and first-run television programs. Releasing the content at the proper date and time, as is often done on the web, creates an influx of requests for the content and the download can take significant time as the size of the information grows. In bandwidth constrained connections, such as certain wireless connections, such simultaneous download can significantly strain resources.
[0002a] US 2001/0052071 A1 proposes an encryption system and method for inhibiting the encryption of encrypted data until a preset encryption time has come.
[0002b] GB 2 399 724 A mentions an encryption scheme where public and private keys for encrypting and decrypting are associated with particular access time periods.
[0002c] US 2002/0097878 A1 discloses a key management system where secrecy protection is ended after a predefined time.
[0002d] DE 102 45 763 A1 concerns an encryption scheme where publication of the decryption key takes place a specified time after publication of the encryption key.

### GENERAL

In one aspect, there may be provided a media security system comprising a security server. The security server may be configured to generate a security token, said security token comprising a public encryption key and a corresponding private encryption key and time stamps associated with said keys. The time stamp may represent a time after generation of the keys.

The media security system may further comprise a media server configured to access said public encryption key at a time prior to a time identified by said time stamp and a plurality of additional servers. The media server may be configured to generate a secure media package using said public encryption key at a time prior to said time identified by said time stamp and to broadcast said secure media package to said plurality of additional servers such that said secure media package is accessible from said plurality of additional servers to a plurality of client machines at a time prior to said time identified by said time stamp.

The security server may further be configured to broadcast said private encryption key to said plurality of additional servers at a time equal to or after said time identified by said time stamp such that said private encryption key is accessible from said plurality of additional servers to said plurality of client machines at a time equal to or after said time identified by said time stamp.

In another aspect, there may be provided a method for generating security tokens.

In yet another aspect, there may be provided a computer-readable medium comprising instructions for causing a computing device to implement the steps of the above method.

### BRIEF DESCRIPTION OF THE DRAWINGS

Figure 1 is schematic representation of a media security system.

Figure 2 shows the system of Figure 1 with specific features according to an embodiment.

Figure 3 shows a flow-chart depicting a method of generating security tokens.

Figure 4 shows a flow-chart depicting a method of generating secure media packages.

Figure 5 shows the system of Figure 2 during exemplary performance of step 415 in Figure 4.

Figure 6 shows the system of Figure 2 subsequent to performance of method of Figure 4.

Figure 7 shows a flow-chart depicting a method of recovering a secure media package.

Figure 8 shows the system of Figure 2 during exemplary performance of step 720 of Figure 7 by client machine 62-2.

Figure 9 shows the system of Figure 2 during exemplary performance of step 720 of Figure 7 by client machine 62-1 and exemplary performance of step 725 of Figure 7 by client machine 62-2.

### DESCRIPTION OF PREFFERED EMBODIMENTS

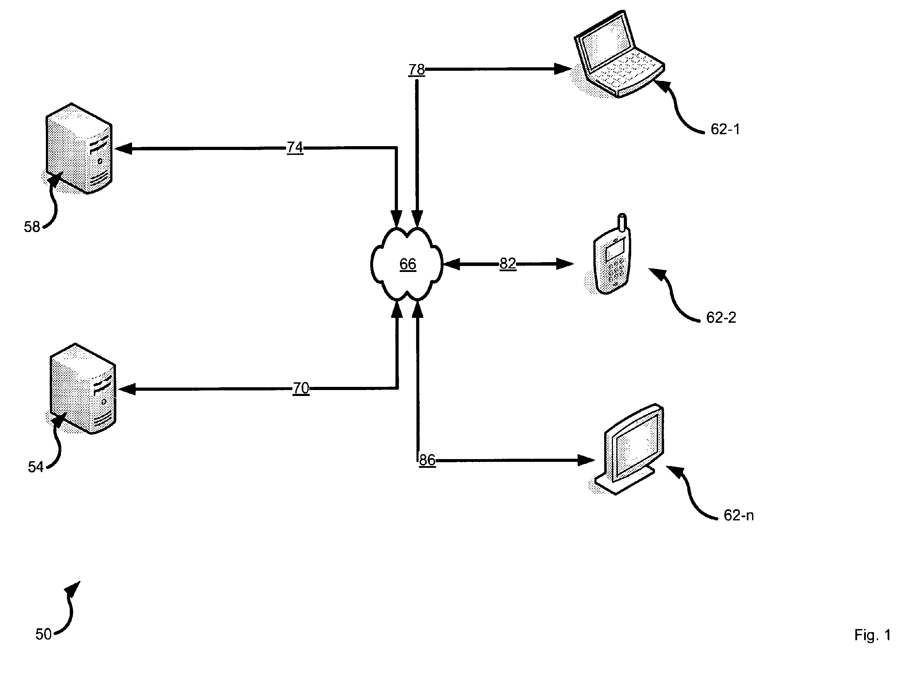

Referring now to Figure 1, a media security system is indicated generally at 50. System 50 comprises at least one media server 54, at least one security server 58 and a plurality of client machines 62-1, 62-2 ... 62-n (collectively client machines 62, and generically client machine 62. This nomenclature is used elsewhere herein.) A network 66 interconnects each of the foregoing components.

Media server 54 and security server 58 (which can, if desired, be implemented on a single server) can be based on any well-known server environment including a module that houses one or more central processing units, volatile memory (i.e. random access memory), persistent memory (i.e. hard disk devices) and network interfaces to allow servers 54 and 58 to communicate over network 66. For example, server 54 or server 58 or both can be a Sun Fire V480 running a UNIX operating system, from Sun Microsystems, Inc. of Palo Alto Calif., and having four central processing units each operating at about nine-hundred megahertz and having about sixteen gigabytes of random access memory. However, it is to be emphasized that this particular server is merely exemplary, and a vast array of other types of computing environments for servers 54 and 58 are contemplated.

Each client machine 62 is typically any type of computing or electronic device that can present media to a user of such a machine 62. For example, in a present embodiment machine 62-1 is a laptop computer having a keyboard and a pointing device (or other input devices or all of the foregoing), a display, speakers, (or other output devices or all of the foregoing) and a chassis to which the keyboard, pointing device, display monitor, speakers are mounted. The chassis also houses one or more central processing units, volatile memory (i.e. random access memory), persistent memory (i.e. flash memory devices) and network interfaces to allow machine 62-1 to communicate over network 66. As another example, client machine 62-2 is a mobile electronic device with the combined functionality of a personal digital assistant, cell phone, email paging device, and a media player. Such a mobile electronic device will thus include its own, albeit smaller, version of the hardware components within machine 62-1, including a keyboard, (or other input devices or both), a display, speakers, (or other output devices or all of the foregoing) and a chassis to which the keyboard, display monitor, speakers are mounted. The chassis also houses one or more central processing units, volatile memory (i.e. random access memory), persistent memory (i.e. hard disk devices) and network interfaces to allow machine 62-2 to communicate over network 66. As another example, client machine 62-n is a television with a digital television signal receiver. Such a television will also include its own version of the hardware components within machine 62-1, including a remote control input device, a screen, speakers and a chassis to which the screen and speakers and an infrared receiver for receiving signals from the remote control is mounted. The chassis can also house the digital television signal receiver which is configured to receive media via network 66 and to present that media on the screen. The digital television signal receiver can also include appropriate software and hardware to authenticate subscriptions associated with client machine 62-n.

It should now be understood that the nature of network 66 is not particularly limited and that network 66 is, in general, based on any combination of network architectures that will support client machines 62 and servers 54 and 58. Accordingly, the links between network 66 and the interconnected components are complementary to functional requirements of those components.

In a present, purely exemplary embodiment, it is contemplated that network 66 will include at least some of the functionality of the Internet. Servers 54 and 58 can thus be configured to support the functionality of a web-server or file-transfer-protocol ("FTP") server or the like. Accordingly, server 54 will connect to network 66 via a first backhaul link 70 while server 58 will connect to network 66 via a second backhaul link 74. Links 70 and 74 have bandwidth capacity to support content requests from client machines 62.

Client machine 62-1 can be configured to support the functionality of a web-client or FTP client or the like. Accordingly, client 62-2 will connect to network 66 via any standard wired or wireless Internet link 78, such as digital subscriber line ("DSL"), Community Access Television ("CATV") coaxial cable, Institute of Electrical and Electronic Engineers (IEEE) standard 802.11g (or its variants), Bluetooth or hybrids or combinations or successors thereof or combinations thereof.)

Client machine 62-2 can also be configured to support the functionality of a web-client, FTP client, or a mobile wireless data connection such as General Packet Radio Service ("GPRS"), Enhanced Data rates for Global Evolution ("EDGE"), IEEE standard 802.16, or the like. Accordingly, client 62-2 will connect to network 82 via any wireless link 78 supportive of the foregoing (e.g. GPRS, EDGE, IEEE 802.11g (or its variants), IEEE 802.16, Bluetooth or hybrids or combinations or successors thereof or combinations thereof.)

Client machine 62-n can be configured to support any the functionalities of either client machine 62-1 or client machine 62-2, or configured to support traditional television links such as CATV, or standard land-based or satellite television broadcast or combinations of the foregoing. Accordingly client 62-n will connect to network 66 via a link 86 that is supportive of any of the foregoing.

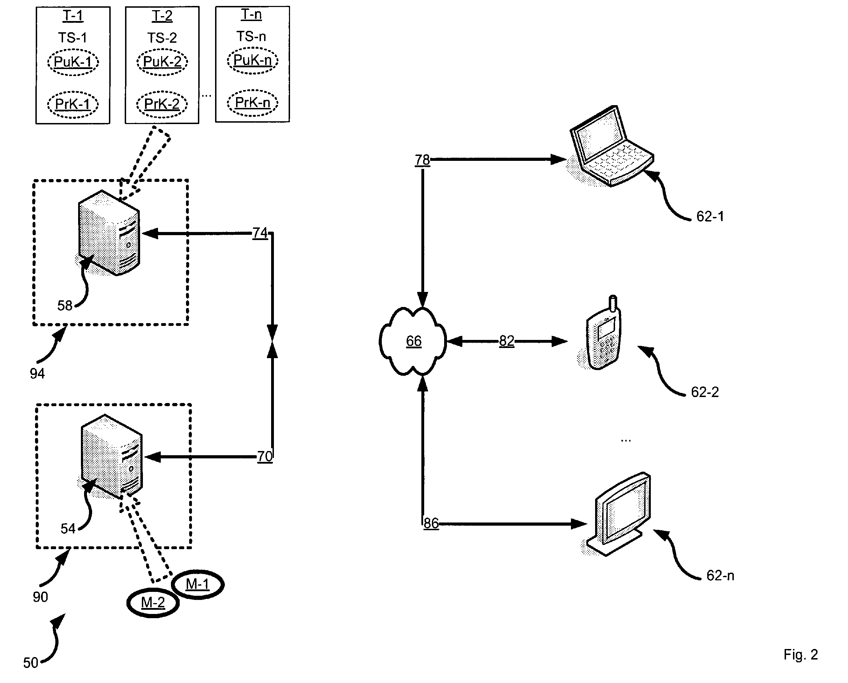

Referring now to Figure 2, system 50 is shown with additional features according to a present embodiment. In the present embodiment, media server 54 is operated by a media provider 90, while security server 58 is operated by a trusted third-party referred to herein as a security manager 94. (It is to be reemphasized that this is a non-limiting example and there is no reason that servers 54 and 58 cannot be operated by the same entity.) As will be explained, in greater detail below, each client machine 62 is operated by a subscriber that is interested in accessing media stored on server 54.

Media server 54 is configured to maintain media packages M that are intended to only be available to client machines 62 at a predefined time. As will be discussed in greater detail below, media server 54 is also configured to cooperate with security server 58 in order to generate secure versions of media content M such that only those secure versions of media content M are available for download to client machines 62. However, those secure versions of media content M are also made available for download to client machines 62 prior to the predefined time.

In Figure 2, two media packages M-1, M-2 are represented in the form of ovals. Media packages M can contain media files containing any type of media that is intended for delivery to one or more of client machines 62. Such media packages M can thus contain, for example, press releases, new movie releases, first-run television programs, music files, video games, software or the like. Other types of media that can be stored in media packages M will now occur to those skilled in the art.

In Figure 2, media packages M are represented as ovals with solid lines. The solid lines represent that media packages M are in a non-secure form meaning that they are immediately playable (or executable or otherwise usable, as the context requires) on client machines 62. In a present embodiment, media packages M are, in this form, maintained by server 54 but not available for delivery (e.g. download) to client machines 62. The fact that media packages M are not available to client machines 62 is represented in Figure 2 (and where applicable to other Figures) by showing link 70 disconnected from network 66. (It is to be understood that this representation is for convenience in order to assist in explanation).

In Figure 2, security server 58 is configured to maintain time-stamped security tokens T that can be used to generate secure versions of media packages M and can be used by client machines 62 to recover those secure versions of media packages M into non-secure versions of media packages M. In a present embodiment, security tokens T are implemented using a private and public key pair. (Another alternative implementation could include shared symmetric keys, which could be implemented where media server 54 can be trusted not to leak the key.)Such private and public key pairs can be generated using any known key pair generation technique, such as the techniques used to generate key pairs for incorporation into digital certificates that are used to verify authenticity of websites or emails. Each token T thus includes a public key PuK and a private key PrK. Each token T is also associated with a particular time stamp TS. As will be explained in greater detail below, the public keys PrK are available to server 54 at a time that is in advance of a particular time stamp TS actually passing, while the private keys PrK are only made available to client machines 62 at a time that corresponds to, or is subsequent to, a particular time stamp TS actually occurring. The foregoing is represented in Figure 2 (and where applicable to other Figures) by showing link 74 disconnected from network 66, while being connected to link 70. (It is to be understood that this representation is for convenience in order to assist in explanation).

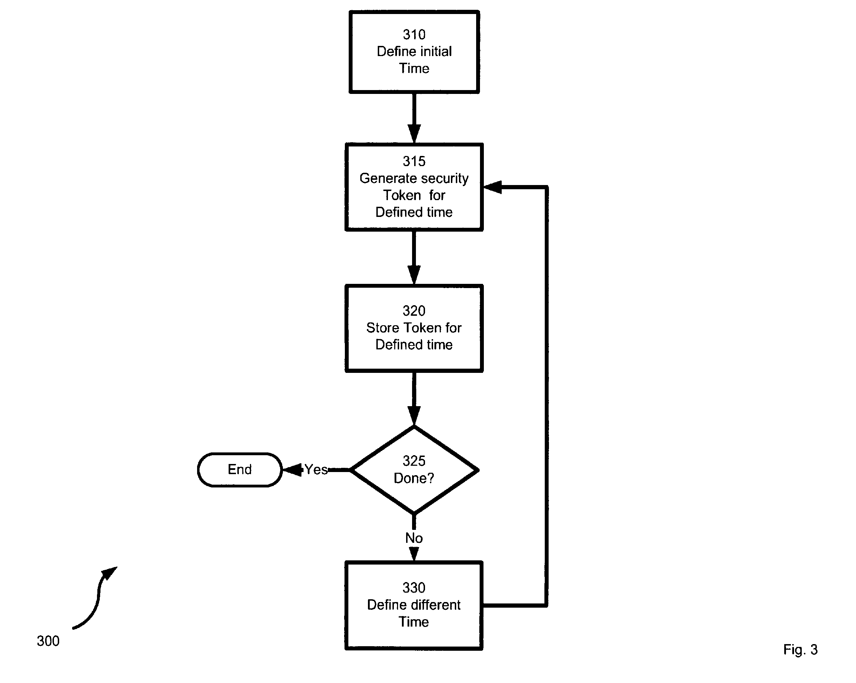

Referring now to Figure 3, tokens T can be generated according to the flow-chart representing a method for generating tokens and indicated generally at 300. In a present embodiment, method 300 is performed by server 58, but this is not required. At step 310 an initial time stamp is defined. The initial time stamp is typically set to a point in the future from time that method 300 is actually performed. At step 315 a security token is generated. In the present embodiment, the security token comprises a private key PrK and a public key PuK which is generated using known techniques, as previously-discussed. At step 320, the token generated at step 315, including the time stamp associated with the generation of the token, is stored. Next at step 325, a determination is made as to whether a desired number of tokens have been generated. If so, method 300 ends. If not, at step 330 another time is defined and the method returns to step 315. The other time defined at step 330 is also typically set to a point in the future from the time that step 330 is actually performed. One way to implement step 330 is to simply increment from the initial time defined at step 310 by a predefined interval, such as one minute, one hour, or one day, as desired. Subsequent performances of step 330 would simply continuing incrementing the time stamp by the predefined interval.

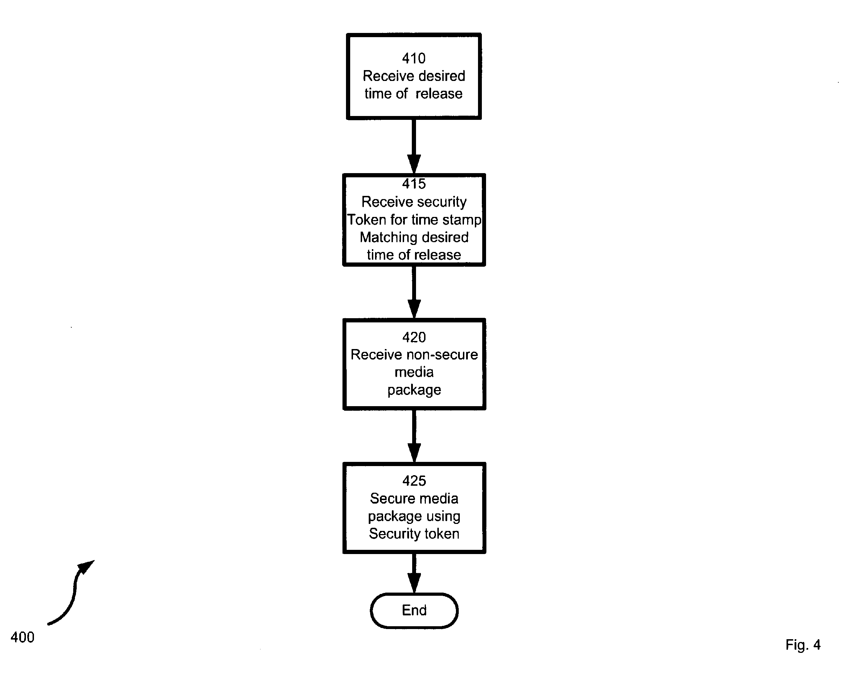

Referring now to Figure 4, secure versions of media packages M can be generated according to the flow-chart representing a method for securing media packages and indicated generally at 400. In a present embodiment, method 400 is performed by server 54, but this is not required. Beginning first at step 410, a desired time of release is received. The desired time of release can be based on any factors. Typically, such factors are associated with the nature of the media package M. For example, if the media package M is a new movie, then the time stamp will correspond to a release date for the new movie that has been set by the media provider 90, which in this example could be a movie studio or distribution company that is releasing the movie. As another example, if the media package M is a press release containing corporate earnings in which case the media provider 90 can be the corporation issuing the press release, then the time stamp can be chosen to correspond with a date and time that complies with securities regulations. Those skilled in the art will now recognize that since the nature of media package M is not particularly limited, then likewise, the selection of a time stamp to be associated with a release of that media package M is also not particularly limited.

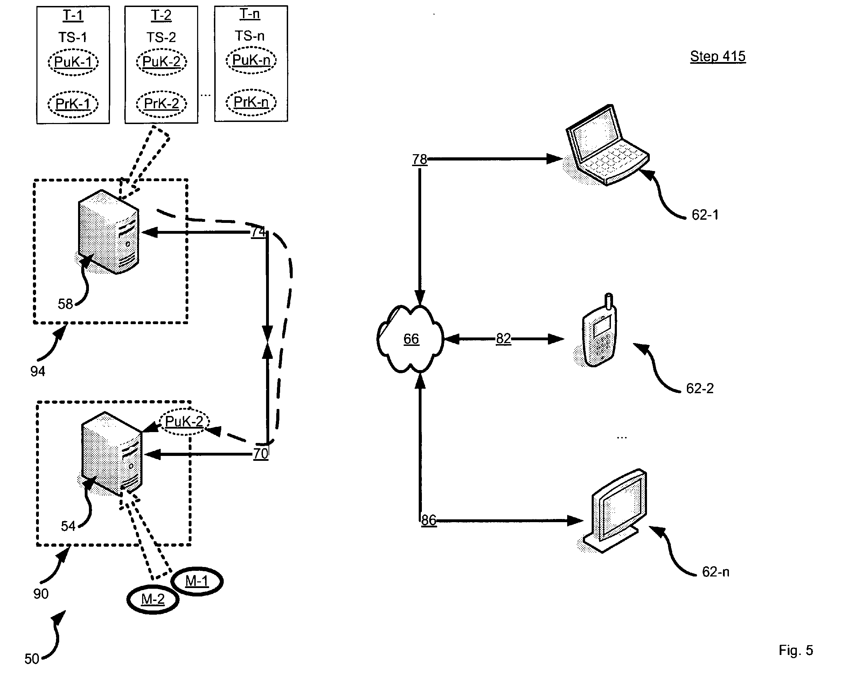

To assist in explaining method 400, an example is helpful. Assume that media package M-1 is to be released at time stamp TS-2. Accordingly, at step 410, a time that matches TS-2 will be received at server 54. Next, at step 415 a security token respective to the time stamp from step 410 will be received. In the present example relative to system 50, server 54 will thus request a copy of public key PuK-2 from server 58, and download public key PuK-2 to server 54, as represented in Figure 5. To demonstrate connection from server 54 to server 58, (and to represent that media packages M are not available to client machines 62) link 70 is shown as directly connected to link 74.

Next, at step 420, the non-secure media package is received. In the example shown in relation to system 50, step 420 has effectively already occurred as media package M-1 is already shown stored on server 54.

Next, at step 425, the non-secure media package is secured using the security token received at step 415. In a present embodiment, an encrypted version of media package M-1 is generated using public key PuK-2.

Method 400 can then be repeated for media package M-2. Once media packages M have been secured, they can then be made available for delivery to client machines 62 at a time in advance of the actual time stamp associated with the secured version of each media package.

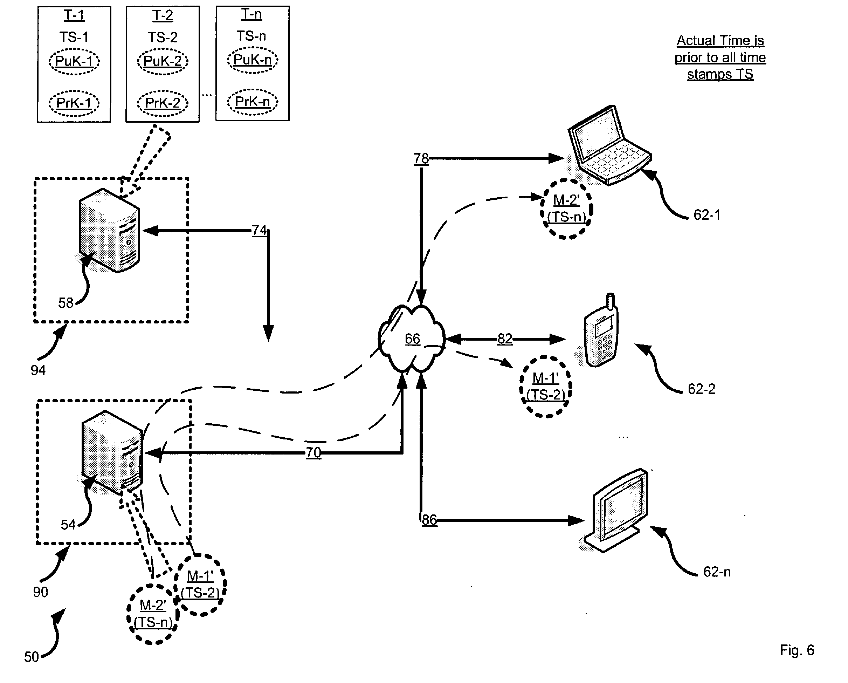

Figure 6 represents a state of system 50 at an actual time that is prior to the time specified in all of the time stamps TS, but after the performance of method 400 on both media packages M. In Figure 6, media packages M are now drawn within dotted-line ovals and marked as M-1' and M-2', in order to represent secure versions of media packages M'. Also, server 54 is also now shown reconnected to network 66 so that media packages M' are deliverable to client machines 62. To further illustrate this point, media package M-1' is shown as having been downloaded to client machine 62-2, while media package M-2' is shown as having been downloaded to client machine 62-1. Of note is that while media package M-1' is now resident on client machine 62-2, and media package M-2' is now resident on client machine 62-1, those media packages M' are not actually playable (or otherwise usable) since they are in encrypted form.

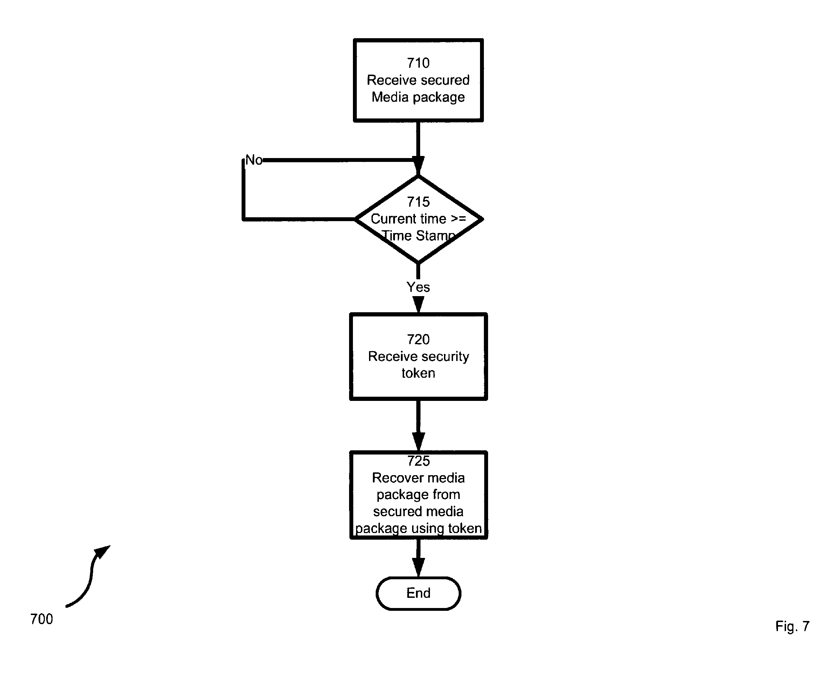

Referring now to Figure 7, secure versions of media packages M' can be converted into playable (or otherwise usable) versions of media packages M according to the flow-chart representing a method for recovering secured media packages and indicated generally at 700. At step 710, a secured media package is received. Exemplary performance of step 710 has been previously represented in Figure 6, where media package M-1' is shown as having been downloaded to client machine 62-2, while media package M-2' is shown as having been downloaded to client machine 62-1.

Next, at step 715, a determination is made as to whether the current time is equal to or past the time stamp associated with the secure media package received at step 710. This step can be performed by various components in system 50 and in various ways. In a present example, step 715 is performed automatically by the relevant client machine 62. If the determination at step 715 is "no" then method 700 cycles back to step 715. Once a "yes" determination is made at step 715, method 700 will advance to step 720. At step 720, a security token corresponding to the time stamp associated with the secured media package is received.

(In other embodiments, it should be understood that at least some portions of method 700 could be performed by other components. For example, step 715 could be performed by server 58, and step 720 could also be performed by server 58, which could send the security token to the relevant client machine without waiting for a request from the client machine 62.)

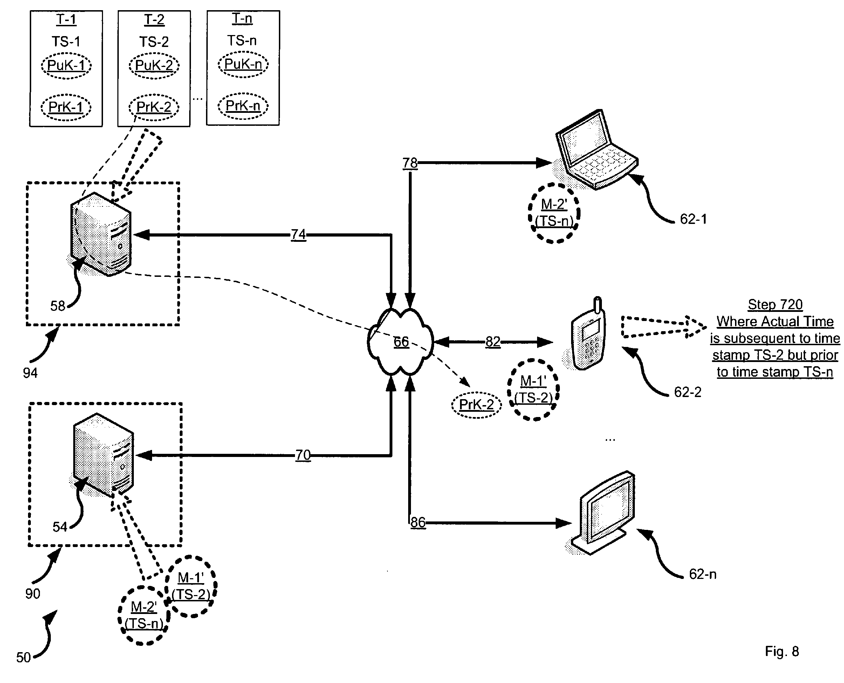

To illustrate exemplary performance of step 720, assume that the actual time is equal to time stamp TS-2, but prior to time stamp TS-n. Figure 8 reflects the state of system 50 according to this example, whereby client machine 62-2 has downloaded private key PrK-2 from server 58. Also in according to this example, however, client machine 62-1 is still unable obtain private key PrK-n from server 58 since the actual time is still prior to time stamp TS-n.

Referring again to Figure 7, at step 725 the media package M is recovered from the secured media package M' using the token received at step 720. On system 50, step 725 is performed by using standard decryption techniques using the encrypted version of media package M' and applying an appropriate computing operation to media package M' in conjunction with private key PrK-n in order to finally recover the original media package M.

Upon performance of step 725, method 700 ends.

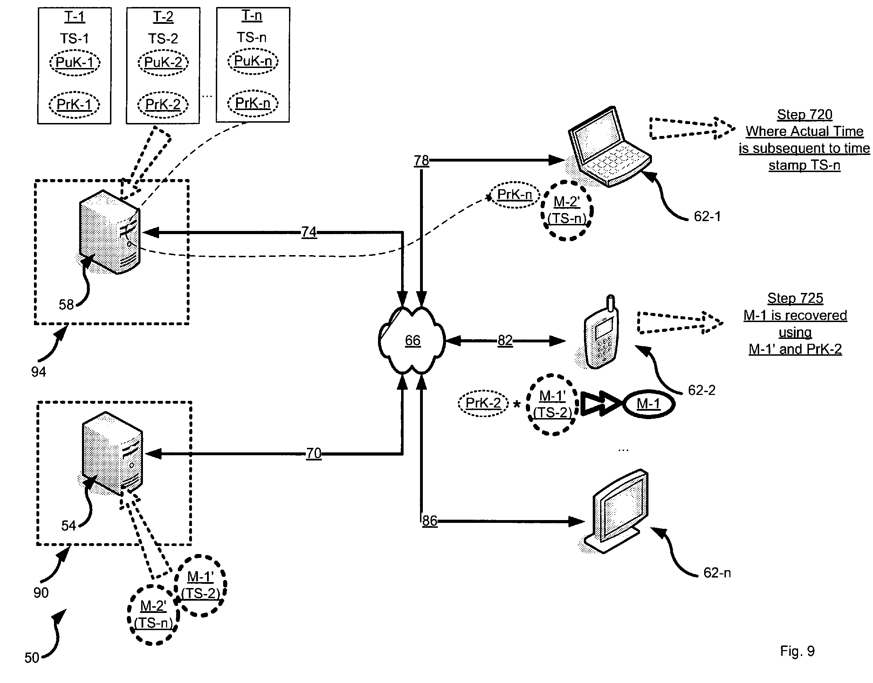

To help further illustrate exemplary performance of step 720 and step 725, assume that the actual time is equal to time stamp TS-n, and after time stamp TS-2. Figure 9 reflects the state of system 50 according to this example, whereby client machine 62-2 is performing step 725 in order to recover media package M-1 using private key PrK-2 and secure media package M-1. Likewise, Figure 9 reflects the state of system 50 according to this example, whereby client machine 62-1 is performing step 720 and is receiving private key PrK-n. Thereafter, client machine 62-1 can also perform step 725 in order to recover media package M-2. (Note that performance of method 700 on each client machine 62 is completely independent from each other and that simultaneous performance of method 700 in the Figures is not intended to denote any dependence.)

Thus, once media package M-1 is recovered and once the current time passes time stamp TS-2, then client machine 62-2 can actually play (or otherwise use or access) that recovered media package M-1 in the usual manner. Likewise, once media package M-2 is recovered once the current time passes time stamp TS-n then client machine 62-1 can actually play (or otherwise use) that media package M-2 in the usual manner.

While different advantages to the foregoing will occur to those skilled in the art, one advantage is that download of a given secure media package M' to a plurality of client machines 62 can occur asynchronously and thereby present less strain on link bandwidth and server 54 resources than if downloads of media packages M were to occur synchronously at the predetermined time of the release. Instead, less strain occurs to link bandwidth and server 58 resources as a plurality of client machines only need download the relatively small private key PrK associated with the secured version of the media package M at the predetermined time of the release. However, the effect is substantially the same in that controlled time release of a media package M is effected.

The foregoing presents certain exemplary embodiments, but variations or combinations or subsets thereof are contemplated. For example, system 50 can be varied whereby server 58 is used to asynchronously distribute public encryption keys and corresponding private encryption keys at different times for different applications other than those described herein in relation to server 54 or client machines 62 or both. As another variation, it should be understood that client machines 62 need not actually obtain secure media packages M' via network 66, but that secure media packages M' and private keys PrK can be loaded onto client machines 62 in other ways, such as via universal serial bus ("USB") pen drives or other removable media. As another variation, embodiments can be modified so that media server 54 or security server 58 or both operate in a broadcast communication mode, whereby media respective to server 54 and encryption tokens respective server 58 travel out from those servers. For example, encrypted media packages M' files can be sent from server 54 to be posted on other servers (not shown) or otherwise be available for any client machine 62 to obtain. Likewise, the relevant private key private key PrK would be sent at the appropriate time to be posted on other servers or otherwise be available for any client machine 62 to obtain. Alternatively, a hybrid approach can be employed whereby either the media packages M' or the private key PrK would be broadcast at the appropriate time.

## Claims

1. A media security system comprising:
a security server (58) comprising a computing environment having a module that houses one or more central processing units, volatile memory, persistent memory and a network interface; said security server (58) configured to generate a security token, said security token comprising a public encryption key and a corresponding private encryption key; said security server (58) further configured to generate, for said public encryption key and said corresponding private encryption key, a time stamp associated with said public encryption key and said private encryption key; said time stamp representing a time after generation of said public encryption key and said private encryption key;
a media server (54) comprising a computing environment having a module that houses one or more central processing units, volatile memory, persistent memory and a network interface; said media server (54) configured to access said public encryption key at a time prior to a time identified by said time stamp;
a plurality of additional servers, each additional server comprising a computing environment having a module that houses one or more central processing units, volatile memory, persistent memory and a network interface;
said media server (54) configured to generate a secure media package using said public encryption key at a time prior to said time identified by said time stamp and to broadcast said secure media package to said plurality of additional servers such that said secure media package is accessible from said plurality of additional servers to a plurality of client machines (62) at a time prior to said time identified by said time stamp;
said security server (58) further configured to broadcast said private encryption key to said plurality of additional servers at a time equal to or after said time identified by said time stamp such that said private encryption key is accessible from said plurality of additional servers to said plurality of client machines (62) at a time equal to or after said time identified by said time stamp.

2. The system of claim 1, further comprising:
a plurality of client machines (62), each of said plurality of client machines (62) comprising a computing environment having an input device, an output device and a chassis to which the input device and the output device are connected; said chassis housing one or more central processing units, volatile memory, persistent memory and an interface interconnected via a bus; said interface for receiving said secure media package at a time prior to a predefined release; each said client machine (62) configured for receiving said private encryption key at time equal to or after said predefined release; each said client machine (62) configured to recover a media package from said secure media package using said private encryption key.

3. The system of claim 2, wherein each said client machine (62) comprises one of a laptop computer, desktop computer, mobile computing device, or a television.

4. The system of any one of claims 2 to 3, wherein said interface of each said client machine (62) comprises a network interface.

5. The system of any one of claims 2 to 3, wherein said interface of each said client machine (62) comprises a port for receiving removable media; said removable media for storing said secure media package.

6. A method for generating security tokens comprising:
defining an initial future time (310);
generating a security token associated with said defined time; said security token comprising a public encryption key and a private encryption key (315);
storing said security token for said defined time (320);
transmitting, at a time prior to said defined time, said public encryption key to a media server (54) for generating a secure media package; and
broadcasting said private encryption key to a plurality of additional servers at a time equal to or after said defined time such that said private encryption key is available for download by a plurality of client machines (62).

7. The method of claim 6 further comprising defining another future time other than said initial future time and repeating said generating and storing.

8. The method of claim 7 wherein said defining said another future time comprises adding a predefined interval to said initial future time.

9. The method of claim 7 or claim 8 comprising repeating said method for a plurality of different defined times.

10. A method for managing media packages comprising:
generating at a security server (58) a security token, said security token comprising a public encryption key and a corresponding private encryption key;
generating at said security server (58) a time stamp associated with said public encryption key and said corresponding private encryption key, said time stamp representing a time after generation of said public encryption key and said private encryption key;
receiving at a media server (54), at a time prior to a time identified by said time stamp, said public encryption key;
receiving a media package (420) at said media server (54);
generating a secure media package using said public encryption key and said media package (425);
broadcasting said secure media package to a plurality of additional servers at a time prior to said time of release such that said secure media package is accessible from said plurality of additional servers to a plurality of client machines (62); and
broadcasting said private encryption key to said plurality of additional servers at a time equal to or after said time identified by said time stamp such that said private encryption key is accessible from said plurality of additional servers to said plurality of client machines (62) at a time equal to or after said time identified by said time stamp.

11. The method of claim 10, further comprising:
receiving said secured media package at at least one of said plurality of client machines (62);
determining if a current time is equal to or after said time represented by said time stamp;
if said current time is equal to or after said time represented by said time stamp, receiving said private encryption key at said client machine (62); and,
recovering, at said client machine (62), said media package using said private encryption key and said secure media package.

12. The method of claim 10 or claim 11 wherein said media package is one of a press release, a television program or a movie.

13. The method of any one of claims 11 to 12, wherein receiving said secured media package at said at least one client machine (62) comprises receiving said secured media package at a time prior to said time identified by said time stamp..

14. The method of any one of claims 11 to 13 wherein receiving said secured media package at said at least one client machine (62) comprises receiving said secured media package from at least one of said plurality of additional servers.

15. A computer-readable medium comprising instructions executable on a processor of a computing device (58) for causing the computing device (58) to implement the steps of the method of any one of claims 6 to 9.

## Patentansprüche

1. Mediensicherheitssystem mit:
einem Sicherheitsserver (58), der eine Rechenumgebung, die ein Modul umfasst, das eine oder mehrere Zentraleinheiten aufnimmt, flüchtigen Speicher, Permanentspeicher und eine Netzschnittstelle aufweist; wobei der Sicherheitsserver (58) dazu konfiguriert ist, ein Sicherheitszeichen zu erzeugen, das einen öffentlichen Verschlüsselungsschlüssel und einen entsprechenden privaten Verschlüsselungsschlüssel aufweist; wobei der Sicherheitsserver (58) ferner dazu konfiguriert ist, für den öffentlichen Verschlüsselungsschlüssel und den entsprechenden privaten Verschlüsselungsselüssel einen Zeitstempel zu erzeugen, der mit dem öffentlichen Verschlüsselungsschlüssel und dem privaten Verschlüsselungsschlüssel verknüpft ist; wobei der Zeitstempel eine Zeit nach Erzeugung des öffentlichen Verschlüsselungsschlüssels und des privaten Verschlüsselungsschlüssels darsttelt;
einem Medienserver (54), der eine Rechenumgebung, die ein Modul umfasst, das eine oder mehrere Zentraleinheiten aufnimmt, flüchtigen Speicher, Permanentspeicher und eine Netzschnittstelle aufweist; wobei der Medienserver (54) dazu konfiguriert ist, auf den öffentlichen Verschlüsselungsschlüssel zu einer Zeit vor einer Zeit zuzugreifen, die vom Zeitstempel identifiziert ist,
einer Vielzahl an zusätzlichen Servern, wobei jeder zusätzliche Server eine Rechenumgebung, die ein Modul umfasst, das eine oder mehrere Zentraleinheiten aufnimmt, flüchtigen Speicher, Permanentspeicher und eine Netzschnittstelle aufweist;
wobei der Medienserver (54) dazu konfiguriert ist, ein sicheres Medienpaket unter Verwendung des öffentlichen Verschlüsselungsschlüssels zu einer Zeit vor der Zeit zu erzeugen, die vom Zeitstempel identifizier ist, und das sichere Medienpaket an die Vielzahl an zusätzlichen Servern zu übertragen, so dass das sichere Medienpaket von der Vielzahl an zusätzlichen Servern an eine Vielzahl an Clientmaschinen (62) zu einer Zeit vor der Zeit zugänglich ist, die vom Zeitstempel identifiziert ist;
wobei der Sicherheitsserver (58) ferner dazu konfiguriert ist, den privaten Verschlüsselungsschlüssel an die Vielzahl an zusätzlichen Servern zu einer Zeit gleich der oder nach der Zeit zu übertragen, die von dem Zeitstempel identifiziert ist, so dass der private Verschlüsselungsschlüssel von der Vielzahl an zusätzlichen Servern für die Vielzahl an Clientmaschinen (62) zu einer Zeit gleich der oder nach der Zeit zugänglich ist, die vom Zeitstempel identifiziert ist.

2. System nach Anspruch 1, ferner mit:
einer Vielzahl an Clientmaschinen (62), wobei jede der Vielzahl an Clientmaschinen (62) eine Rechenumgebung mit einer Eingabevorrichtung einer Ausgabevorrichtung und einem Träger, mit dem die Eingabevorrichtung und die Ausgabevorrichtung verbunden sind, aufweist; wobei der Träger eine oder mehrere Zentraleinheiten flüchtigen Speicher, Permanentspeicher und eine über einen Bus verbundene Schnittstelle aufnimmt; wobei die Schnittstelle zum Empfangen des sicheren Medienpakets zu einer Zeit vor einer vorher festgelegten Veröffentlichung dient; wobei jede Clientmaschine (62) zum Empfangen des privaten Verschlüsselungsschlüssel zu einer Zeit gleich der oder nach der vorher festgelegten Veröffentlichung konfiguriert ist; wobei jede Clientmaschine (62) dazu konfiguriert ist, ein Medienpaket vom sicheren Medienpaket unter Verwendung des privaten Verschlüsselungsschlüssels zurückzugewinnen.

3. System nach Anspruch 2, wobei jede Clientmaschine (62) eines aus einem Laptopcomputer, einem Desktopcomputer, einer mobilen Rechenvorrichtung oder einem Fernseher aufweist.

4. System nach Anspruch 2 order 3, wobei die Schnittstelle jeder Clientmaschine (62) eine Netzschnittstelle aufweist.

5. System nach Anspruch 2 oder 3, wobei die Schnittstelle jeder Clientmaschine (62) einen Port zum Aufnehmen entfernbarer Medien aufweist, die zum Speichern des sicheren Medienpakets dienen.

6. Verfahren zum Erzeugen von Sicherheitszeichen mit:
Festlegen einer initialen zukünftigen Zeit (310),
Erzeugen eines Sicherheitszeichens, das mit der festgelegten Zeit verknüpft ist; wobei das Sicherheitszeichen einen öffentlichen Verschlüsselungsschlüssel und einen privaten Verschlüsselungsschlüssel aufweist (315);
Speichern des Sicherheitszeicher für die festgelegte Zeigt (320);
Übermitteln des öffentlichen Verschlüsselungsschlüssels zu einer Zeit vor der festgelegten Zeit an einen Medienserver (54) zum Erzeugen eines sicheren Medienpakets und
Übertragen des privaten Verschlüsselungsschlüssels an eine Vielzahl an zusätzlichen Servern zu einer Zeit gleich der oder nach der festgelegten Zeit, so dass der private Verschlüsselungsschlüssel zum Herunterladen durch eine Vielzahl an Clientmaschine (62) verfügbar ist.

7. Verfahren nach Anspruch 6, ferner mit Festlegen einer weiteren zukünftigen Zeit neben der intialen zuhünftigen Zeit und Wiederholen des Erzeugens und Speichern.

8. Verfahren nach Anspruch 7, wobei das Festlegen der weiteren zukünftigen Zeit ein Hinzuzählen eines vorher festgelegten Intervalls zur initialen zukünftigen Zeit aufweist.

9. Verfahren nach Anspruch 7 oder 8 mit Wiederholen des Verfahrens für eine Vielzahl an verschiedenen festgelegen Zeiten.

10. Verfahren zum Verwalten von Medienpaketen mit:
Erzeugen eines Sicherheitszeichens an einem Sicherheitsserver (58), der einen öffentlichem Verschlüsselungsschlüssel und einen entsprechenden privaten Sicherheitsschlüssel aufweist,
Erzeugen eines Zeitstempels, der mit dem öffentlichen Verschlüsselungsschlüssel und dem entsprechender privaten Verschlüsselungsschlüssel verknüpft ist, an einem Sicherheitsserver (58), wobei der Zeitstempel eine Zeit nach Erzeugung des öffentlichen Verschlüsselungsschlüssels und des privaten Verschlüsselungsschlüssels darstellt,
Empfangen des öffentlichen Verschlüsselüngsschlüssels an einem Medienserver (54) zu einer Zeit vor einer Zeit, die vom Zeitstempel identifiziert ist,
Empfangen eines Medienpakets (420) am Medienserver (54),
Erzeugen eines sicheren Medienpakets unter Verwendung des öffentlichen Verschlüsselungsschlüssels und des Medienpakets (425),
Übertragen des sicheren Medienpakets an eine Vielzahl an zusätzlichen Servern zu einer Zeit vor der veröffentlichungszeit, so dass das sichere Medienpaket von der Vielzahl an zusätzlichen Servern für eine Vielzahl an Clientmaschinen (62) zugänglich ist, und
Übertragen des privaten Verschlüsselungsschlüssels an die Vielzahl an Servern zu einer Zeit gleich der oder nach der Zeit, die vom Zeitstempel identifizert ist, so dass der private Verschlüsselungsschlüssel von der Vielzahl an zusätzlichen Servern für die Vielzahl an Clientmaschinen (62) zu einer Zeit gleich der oder nach der Zeit, die vom Zeitstempel identifiziert ist, zugänglich ist.

11. Verfahren nach Anspruch 10, ferner mit:
Empfangen des gesicherten Medienpakets an mindestens einer der Vielzahl an Clientmaschinen (62),
Bestimmen, ob eine aktuelle Zeit gleich der oder nach der vom Zeitstempel dargestellten Zeit ist,
wenn die aktuelle Zeit gleich der oder nach der vom Zeitstempel dargestellten Zeit ist, Empfangen des privaten Verschlüsselungsschlüssels an der Clientmaschine (62), und
Zurückgewinnen des Medienpakets an der Clientmaschine (62) unter Verwendung des privaten Verschlüsselungsschlüssels und des sicheren Medienpakets.

12. Verfahren nach Anspruch 10 oder 11, wobei das Medienpaket eines aus einer Pressermitteilung, einem Fernsehprogramm oder ein Film ist.

13. Verfahren nach Anspruch 11 oder 12, wobei das Empfangen des gesicherten Medienpakets an der mindestens einen Clientmaschine (62) ein Empfangen des gesicherten Medienpakets zu einer Zeit vor der Zeit aufweist, die vom Zeitstempel identifiziert ist.

14. Verfahren nach einem der Ansprüche 11 bis 13, wobei das Empfangen des gesicherten Medienpakets an mindestens einer Ciientmaschine (62) ein Empfangen des gesicherten Medienpakets von mindestens einem der Vielzahl an Servern aufweist.

15. Computerlesbares Medium mit Befehlen, die auf einem Prozessor einer Rechenvorrichtung (58) zum Veranlassen der Rechenvorrichtung (58), die Schritte des Verfahrens nach einem der Ansprüche 6 bis 9 durchzuführen, ausführbar sind.

## Revendications

1. Système de sécurité pour contenus multimédias, comprenant :
un serveur de sécurité (58) comprenant un environnement informatique possédant un module qui abrite une ou plusieurs unités centrales de traitement, de la mémoire volatile, de la mémoire persistante et une interface de réseau ; ledit serveur de sécurité (58) étant configuré pour produire un jeton de sécurité, ledit jeton de sécurité comprenant une clef de chiffrement publique et une clef de chiffrement privée correspondante ; ledit serveur de sécurité (58) étant en outre configuré pour produire, à partie de ladite clef de chiffrement publique et de ladite clef de chiffrement privée correspondante, un horodatage associé à ladite clef de chiffrement publique et à ladite clef de chiffrement privée ; ledit horodatage représentant un instant postérieur à la production de ladite clef de chiffrement publique et de ladite clef de chiffrement privée ;
un serveur de contenus multimédias (54), comprenant un environnement informatique possédant un module qui abrite une ou plusieurs unités centrales de traitement, de la mémoire volatile, de la mémoire persistante et une interface de réseau ; ledit serveur de contenus multimédias (54) étant configuré pour accéder à ladite clef de chiffrement publique à une instant antérieur à un instant identifié par ledit horodatage ;
une pluralité de serveurs additionnels, chaque serveur additionnel comprenant un environnement informatique possédant un module qui abrite une ou plusieurs unités centrales de traitement, de la mémoire volatile, de la persistante et une interface de réseau ;
ledit serveur de contenus multimédias (54) étant configuré pour produire un paquetage multimédia sécurisé en utilisant ladite clef de chiffrement publique à un instant antérieur audit instant identifié par ledit horodatage et pour diffuser généralement ledit paquetage multimédia sécurisé vers ladite pluralité de serveurs additionnels, si bien que ledit paquetage multimédia sécurisé est accessible auprès de ladite pluralité de serveurs additionnels à une pluralité de machines clientes (62) à un instant antérieur pluralité de machines clientes (62) à un instant antérieur audit instant identifié par ledit horodatage ;
lendit serveur de sécurité (58) étant en outre configuré pour diffuser généralement ladite clef de chiffrèrent privée vers ladite pluralité de serveurs additionnels à un instant égal ou postérieur audit instant identifié par ledit horodatage, si bien que ladite clef de chiffrement privée est accessible auprès de ladite pluralité de serveurs additionnels par ladite pluralité de machines clientes (62) à un instant égal ou postérieur audit instant identifié par ledit horodatage.

2. Système selon à revendication 1, comprenant en outre :
une pluralité de machines clientes (62), chacune des machines de ladite pluralité de machines clientes (62) comprenant un environnement informatique possédant un dispositif d'entrée, un dispositif de sortie et un châssis sur lequel sont connectés le dispositif d'entrée et le dispositif de sortie ; ledit châssis abritant une ou plusieurs unités centrales de traitement, de la mémoire volatile, de la mémoire persistante et une interface interconnectée par un bus : ladite interface étant destinée à recevoir ledit paquetage multimédia sécurisé à un instant antérieur à une date de diffusion prédéterminée ; chacune desdites machines clientes (62) étant configurée pour recevoir ladite clef de chiffrement privée à un instant égal ou postérieur à ladite date de diffusion prédéterminée ; chacune desdites machines clientes (62) étant configurée pour extraire un paquetage multimédia dudit paquetage multimédia sécurisé à l'aide de ladite clef de chiffrement privée.

3. Système selon la revendication 2, dans lequel chacune desdites machines clientes (62) est constituée d'un ordinateur portable, d'un ordinateur de bureau, d'un dispositif informatique portatif ou d'un téléviseur.

4. Système selon l'une quelconque des revendications 2 et 3, dans lequel ladite interface de chacune desdites machines clientes (62) est constituée d'une interface de réseau.

5. Système selon l'une quelconque des revendications 2 et 3, dans lequel ladite interface de chacune desdites machines clientes (62) est constituée d'un port destiné à recevoir un support amovible; ledit support amovible étant destiné à stocker ledit paquetage multimédia sécurisé.

6. Procédé de production de jetons de sécurité, comprenant les étapes consistant à :
définir un instant initial dans l'avenir (310) ;
produire un jeton de sécurité associé audit instant défini; ledit jeton de sécurité comprenant une clef de chiffrement publique et une clef de chiffrement privée (315) ;
stocker ledit jeton de sécurité en attendant ledit instant défini (320);
transmettre ladite clef de chiffrement publique à un instant antérieur audit instant défini vers un serveur de contenus multimédias (54) afin de produire une paquetage multimédia sécurisé ; et
diffuser généralement ladite clef de chiffrement privée vers une pluralité de serveurs additionnels, à un instant égal ou postérieur audit instant défini, afin que ladite clef de chiffrement privée soit disponible pour être téléchargée par une pluralité de machines clientes (62).

7. Procédé selon la revendication 6, comprenant en outre l'étape consistait à définir un autre instant dans l'avenir, autre que ledit instant initial dans l'avenir, et à répéter lesdites étapes de production et de stockage.

8. Procédé selon la revendication 7, dans lequel ladite étape de définition dudit autre instant dans l'avenir comprend l'étape consistant à additionner un intervalle prédéfini audit instant initial dans l'avenir.

9. Procédé selon la revendication 7 ou la revendication 8, comprenant l'étape consistant à répéter ledit procédé pour une pluralité d'instants définis différents.

10. Procédé de gestion des paquetages multimédias, les étapes consistant à:
produire un jeton, de sécurité sur un serveur de sécurité (58), ledit jeton de sécurité comprenant une clef de chiffrement publique et une clef de chiffrèrent privée correspondante ;
produire sur ledit serveur de sécurité (58) un horodatage associé à ladite clef due chiffrèrent publique et, à ladite clef de chiffrèrent privée correspondante, ledit horodatage représentant un instant postérieur à la production de ladite clef de chiffrement publique et de ladite clef de chiffrement privée ;
recevoir ladite clef de chiffrement publique sur un serveur de contenus multimédias (54) , à un instant antérieur à un instant identifié par ledit horodatage ;
recevoir sur ledit serveur de contenus multimédias (54) un paquetage multimédia (420) ;
produire un paquetage multimédia sécurisé à l'aide de ladite clef de chiffrèrent publique et dudit paquetage multimédia (425) ;
diffuser généralement ledit paquetage multimédia sécurisé vers une pluralité de serveurs additionnels à un instant antérieur audit instant de diffusion, si bien que ledit paquetage multimédia sécurisé est accessible à une pluralité de machines clientes (62) auprès de ladite pluralité de serveurs additionnels ; et
diffuser généralement ladite clef de chiffrement privée vers ladite pluralité de serveurs additionnels, à un instant égal ou postérieur audit instant identifié par ledit horodatage, si bien que ladite clef de chiffrement privée est accessible à ladite pluralité de machines clientes (62) auprès de ladite pluralité de serveurs additionnels, à un instant égal ou postérieur audit instant identifié par ledit horodatage.

11. Procédé selon la revendication 10, comprenant en outre les étapes consistant à :
recevoir ledit paquetage multimédia sécurisé sur au moins une machine parmi ladite pluralité de machines clientes (62) ;
déterminer si l'instant courant est égal ou postérieur audit instant identifié par ledit horodatage ;
si ledit instant courant est égal ou postérieur audit instant identifié par ledit horodatage, recevoir ladite clef de chiffrement privée sur ladite machine cliente (62); et
extraire sur ladite machine cliente (62) ledit paquetage multimédia a l'aide de ladite clef de chiffrement privée et dudit paquetage multimédia sécurisé.

12. Procédé selon, la revendication 10 ou la revendication 11, dans lequel ledit paquetage multimédia est un communiqué de presse, une émission de télévision ou un film cinématographique.

13. Procédé selon l'une quelconque des revendications 11 et 12, dans lequel ladite étape de réception dudit paquetage multimédia sécurisé sur ladite au moins une machine cliente (62) comprend l'étape consistant à recevoir ledit paquetage multimédia sécurisé à un instant antérieur audit instant identifié par ledit horodatage.

14. Procédé selon l'une quelconque des revendications 11 à 13, dans lequel ladite étape de réception dudit paquetage multimédia sécurisé sur ladite au moins une machine cliente (62) comprend l'étape consistant à recevoir ledit paquetage multimédia sécurisé en provenance d'au moins un serveur parmi ladite pluralité de serveurs additionnels.

15. Support lisible par ordinateur, comprenant des instructions qui peuvent être exécutées sur un processeur d'un dispositif informatique (58) afin de commander au dispositif informatique (58) de mettre en oeuvre les étapes du procédé selon l'une quelconque des revendications 6 à 9.
